# EUROPEAN PATENT SPECIFICATION

(11) **EP 1 321 712 B1**
(45) Date of publication and mention of the grant of the patent: **29.09.2004**
(21) Application number: 02258732.3
(22) Date of filing: 18.12.2002
(51) Int. Cl.: F23R 3/00, F01D 25/12, F01D 5/08, F02C 7/24

(54) **Integral surface features for CMC components and method therefor**
Integrierte Oberflächenmerkmale für Komponenten aus keramischem Matrix-Verbundwerkstoff und entsprechende Methode
Caractéristiques de surface integrées pour composante CMC et méthode

(30) Priority: 20.12.2001 US 683384
(43) Date of publication of application: 25.06.2003
(73) Proprietor: GENERAL ELECTRIC COMPANY, Schenectady, NY 12345 (US)
(72) Inventor: Cairo, Ronald Ralph, Greer, South Carolina 29650 (US)
(74) Representative: Pedder, James Cuthbert

(56) References cited:
- EP-A- 1 050 663
- WO-A-99/06771
- US-A- 5 331 816
- US-A1- 2001 035 592

## Description

The present invention generally relates to air-cooled components, such as combustor liners for gas turbine engines. More particularly, this invention is directed to a process for incorporating surface features along the airflow passages of a component, such as airflow enhancement features see e.g. EP1050663 to improve the cooling efficiency of the component.

Higher operating temperatures for gas turbine engines are continuously sought in order to increase their efficiency. However, as operating temperatures increase, the high temperature properties of the engine components must correspondingly increase. While significant advances have been achieved through formulation of iron, nickel and cobalt-base superalloys, the high temperature properties of such alloys are often insufficient to withstand long exposures to operating temperatures within the turbine, combustor and augmentor sections of some high-performance gas turbine engines. As a result, internal cooling of components such as combustion liners, blades (buckets) and nozzles (vanes) is often employed, alone or in combination with a thermal barrier coating (TBC) system that thermally protects their exterior surfaces. Effective internal cooling often requires a complex cooling scheme in which air is forced through passages within the component and then discharged through cooling holes at the component surface.

The performance of a turbine component is directly related to the ability to provide a generally uniform surface temperature with a limited amount of cooling air. To promote uniform convective cooling of the component interior, it is conventional to cast airflow enhancement features, such as turbulators (trip strips) and flow guides, on the surfaces of the component that define the cooling passages. The size, shape and placement of the airflow enhancement features affect the amount and distribution of air flow through the cooling circuit and across the external surfaces downstream of the cooling holes, and as such can be effective in significantly reducing the service temperature of the component.

Ceramic matrix composite (CMC) materials have been considered for combustor liners and other high-temperature components. Continuous fiber-reinforced CMC materials are typically woven from tows (bundles of individual filaments) using conventional textile weave patterns, in which two or more sets of tows are woven, with the individual tows of each set passing over and under transverse tows of the other set or sets. As with air-cooled components formed of metal alloys, it is desirable to incorporate airflow enhancement features in air-cooled CMC components. However, because CMC materials exhibit relatively poor interlaminar tension and shear strengths, airflow enhancement features and other surface features cannot be reliably attached using secondary attachment manufacturing procedures if the component is intended for use in the high thermal strain environment of a gas turbine engine. Moreover, because of tow size and weave limitations, it is difficult to weave small geometry turbulators and flow guides (typically projecting from the surrounding surface a distance of about 0.3 to about 2.0 mm) as integral features of a CMC component. Consequently, while airflow enhancement features of the type used with air-cooled metal components can generally be incorporated in the metal casting process so as to be integral with the primary component, attempts to design integral turbulators, flow guides and other surface features in CMC materials have proven problematic. Faithfully reproducing turbulators and other extremely small-scale, detail geometric features in continuous fiber-reinforced CMC materials is particularly difficult.

In view of the above, while CMC materials offer the capability of significantly increasing the maximum operating temperatures sustainable by turbine and other high-temperature components, it would be desirable to incorporate airflow enhancement features in air-cooled CMC components in order to further extend component life and increase engine efficiency.

According to the present invention, there is provided an air-cooled component formed at least in part by a CMC material, and having at least one cooling passage equipped with an integrally-formed surface feature, such as an airflow enhancement feature. The CMC material comprises at least first and second sets of tows woven together to form a preform that is infiltrated with a matrix material. The tows within each set are side-by-side to each other, but transverse to tows of the other set, with tows of each set passing over and under transverse tows of the other. The surface feature is integrally defined at a surface of the cooling passage by an insert member disposed between adjacent tows of at least the first set of tows. In the method of forming the integral surface feature, the insert member is placed between the adjacent tows of the first set of tows during the weaving process, preferably when forming the outermost layer (lamina) of the preform. The insert member has a cross-sectional size larger than the adjacent tows, thereby forming a protrusion in the preform and, after infiltration, consolidation and curing, the surface feature in the surface of the CMC material. The surface feature projects into the cooling passage relative to the immediately surrounding surface region of the passage surface.

In view of the above, the present invention entails integrally forming one or more surface features, particularly airflow enhancement features such as turbulators and flow guides, by strategically placing insert members in the CMC preform during the initial preforming step of the CMC process. The insert member is able to create a functional turbulator or flow guide in the form of a permanent integral surface feature after the woven tows are fully processed, including infiltration with a suitable matrix material, densification and consolidation, and curing of the matrix material to form the CMC. As a result of being integrally formed, the surface feature exhibits better structural integrity as compared to a surface feature added to a CMC by a secondary attachment technique. The manner in which the surface feature is an integral feature retained by the woven fiber network provides a load shielding mechanism, capable of keeping interlaminar tension and shear stresses on the surface feature well within the structural capabilities of the CMC material.

The invention will now be described in greater detail, by way of example, with reference to the drawings, in which:-
Figure 1 is a cross-sectional representation of a CMC combustor liner having a cooling passage equipped with integral turbulators in accordance with this invention.
Figures 2 and 3 are cross-sectional representations of wall portions of preforms for the liner, in which surface features are formed by a stuffer tow and an insert, respectively, in the preform architecture in accordance with two embodiments of this invention.

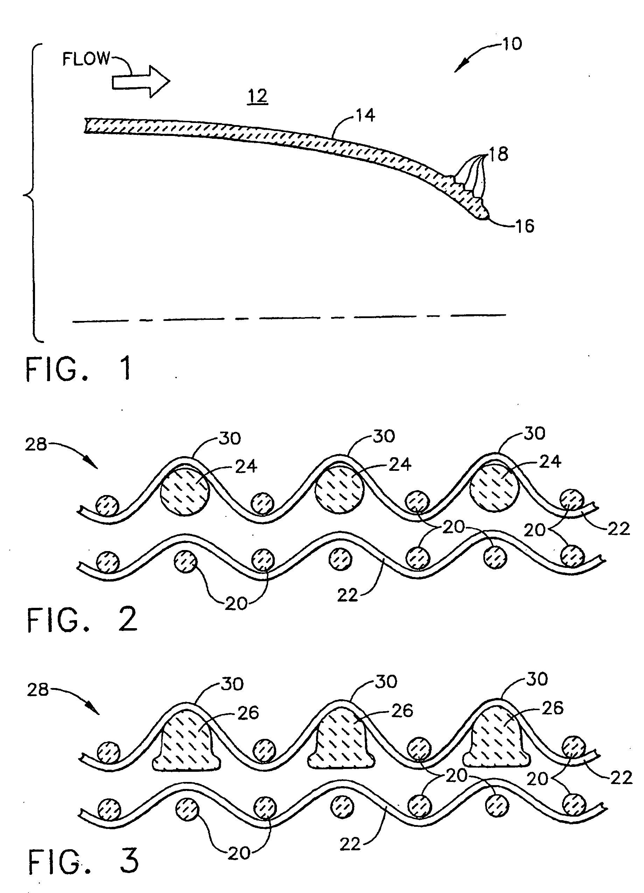

The present invention will be described in reference to a combustor liner 10, a portion of which is represented in cross-section in Figure 1, though the invention is equally applicable to airfoil components such as a turbine blades and vanes. While particularly useful for forming airflow enhancement features, such as turbulators and flow guides for air-cooled components that operate within a thermally hostile environment, the invention is generally applicable to a variety of CMC components in which a small-scale surface feature is desired. In addition, while CMC materials are of particular interest, the invention is applicable to any continuous fiber-reinforced composite material, including polymer matrix and bismalimide matrix materials.

As represented in Figure 1, the liner 10 has a cooling passage 12 defined by a surface 14, and a trailing edge 16 near which a number of turbulators 18 are formed. The turbulators 18 are shown as being disposed transverse to the airflow direction through the passage 12, as indicated by the arrow in Figure 1. However, it is foreseeable that the turbulators 18 could be oriented perpendicular or parallel to the airflow direction (to serve as flow guides), may be continuous or discontinuous (interrupted), and may be V-shaped or have another nonlinear shape. According to known practice, the turbulators 18 are intended to disrupt laminar airflow over the surface 14 in order to promote convection heat transfer from the liner 14 to the air. For this purpose, the turbulators 18 preferably project at least 0.30 mm from the surface 14, with a suitable height being about 0.50 to about 2.0 mm above the surface 14.

The liner 10 is formed of a continuous fiber-reinforced CMC material, such as silicon carbide, silicon nitride or silicon fibers in a silicon carbide, silicon nitride and/or silicon-containing matrix material. The surface 14 of the liner 10 may be protected by a thermal barrier coating (TBC) or an environmental barrier coating (EBC), such as a thermally-insulating ceramic layer adhered to the surface 14 with a bond coat (not shown). Two embodiments of the invention are represented in Figures 2 and 3, which depict woven architectures of preforms 28 for the CMC material prior to infiltration by the matrix material, and two types of inserts 24 and 26 suitable for forming the turbulators 18 of Figure 1. In each of Figures 2 and 3, the architectures of the preforms 28 comprise multiple layers (laminae), each containing sets of woven tows 20 and 22. The tows 20/22 within each set are generally oriented side-by-side and parallel to each other, and transverse to the tows 20/22 of the other set, e.g., the tows 20 seen in cross-section in Figures 2 and 3 are perpendicular to the tows 22 seen lengthwise. The tows 20 and 22 within a given lamina can be seen to pass over and under each other. While the tows 20/22 are shown as passing over and under individual transverse tows 20/22, it is foreseeable that each tow 20/22 could pass over one or more transverse tows 20/22, and then under one or more transverse tows 20/22, in accordance with other known weave patterns.

In Figure 2, multiple "stuffer" tow inserts 24 are shown as being incorporated into the architecture of the preform 28, while in Figure 3 monolithic ceramic inserts 26 are shown. Suitable materials for the tow inserts 24 include the same material as the fiber reinforcement (tows 20 and 22) of the CMC material, e.g., silicon carbide, silicon nitride or silicon fibers, for thermal compatibility, though it is foreseeable that other materials could be used as long as the chosen material is chemically suitable with the service environment of the liner 10 and compatible with the matrix material of the CMC. Similarly, suitable materials for the inserts 26 include monolithic castings of the same material as the matrix material of the CMC material, e.g., silicon carbide, silicon nitride or silicon-containing materials, though again it is foreseeable that other materials could be used. In each case, the tow inserts 24 and monolithic inserts 26 are used in place of a tow of the first set of tows 20, and therefore positioned between an adjacent pair of tows 20 so that the tow insert 24 or monolithic insert 26 passes over and under the transverse tows 22 of the second set.

As apparent from Figures 2 and 3, the diameters of the inserts 24 and 26 are larger than those of the adjacent tows 20, such that the inserts 24 and 26 define protrusions 30 at the surface of the preform 28. Following infiltration with the matrix material, consolidation, densification, and then curing to form the liner 10, the size and shape of the inserts 24 and 26 determine the extent to which the turbulators 18 project above the surrounding surface 14 of the liner 10. Tows, typically circular in cross-section before compaction, will generally assume an oval shape after compaction. As such, a suitable size for a tow insert 24 is at least 50% larger, preferably about o about arger, than the diameter of the tows 20 and 22. On the other hand, a precast monolithic insert 26 generally maintains its original height after compaction. Therefore, a suitable size for a monolithic insert 26 is at least 25% larger, preferably about 50% to about 350% larger, than the diameter of the tows 20 and 22.

Preferences can exist for the use of a tow insert 24 or monolithic insert 26 based on the desired characteristics of a particular surface feature. For example, if a continuous surface feature is desired, a tow insert 24 may be more convenient, while a discontinuous surface feature may be more readily formed with a row of spaced-apart monolithic inserts 26. If a desired surface feature can be formed with either a tow insert 24 or monolithic insert 26, there may be a preference for using a tow insert 24 because of its greater compliance, allowing for more intimate contact with adjacent tows during processing. Potential benefits of intimate tow contact include lower void content or porosity, corresponding to higher interlaminar strengths and through-thickness thermal conductivity.

The tow inserts 24 and monolithic inserts 26 are shown in Figures 2 and 3, respectively, as placed between adjacent tows 20 of only the outermost lamina of the architecture. Depending on the relative diameters of the inserts 24 and 26, it is foreseeable that the inserts 24 and 26 could be incorporated into one or more inner lamina, in addition to or in place of the outermost lamina to provide additional flexibility in the final projected height and shape of the turbulator 18. Furthermore, though Figures 2 and 3 show the tow inserts 24 used separately from the monolithic inserts 26, it is foreseeable that the inserts 24 and 26 could be used together in a single component. For example, because of the difference in their effect on the final size of the turbulator 18, it may be advantageous to use both tow inserts 24 and monolithic inserts 26 to enable the height of the desired surface feature to be fine tuned for a specific application, such as matching specific design, cost or compatibility constraints, or optimizing material, structural or component response.

As noted above, following the fabrication of the preform 28 by laying up a desired number of lamina, the preform 28 is infiltrated with the desired matrix material in accordance with any suitable technique, after which the infiltrated preform undergoes consolidation, densification, and curing to form the CMC material. As known in the art, appropriate processing parameters, including curing (firing) temperature, will depend on the particular composition of the CMC material, and therefore will not be discussed here.

In view of the above, the process of this invention enables turbulators and other surface features to be selectively formed essentially anywhere in a composite material by strategically placing inserts in the composite preform. Turbulators 18 defined by inserts such as the tow inserts 24 and monolithic inserts 26 described above are permanent integral surface features of the CMC, retained by the woven fiber network of the preform 28 to provide a load shielding mechanism that reduces interlaminar tension and shear stresses on the turbulators 18. As a result, the turbulators 18 exhibit better structural integrity as compared to turbulators that are added by a secondary attachment technique.

While the invention has been described in terms of a preferred embodiment, it is apparent that other forms could be adopted by one skilled in the art. For example, while the term "turbulator" was used in reference to the Figures, the teachings of the invention are applicable to the fabrication of other surface features in CMC materials.

## Claims

1. An air-cooled component (10) comprising:
at least one cooling passage (12) defined by a surface (14) of the component (10), at least a portion of the surface (14) being defined by a composite material comprising at least first and second sets of tows (20,22) woven together within a matrix material, the tows (20) of the first set being side-by-side to each other, the tows (22) of the second set being side-by-side to each other and transverse to the tows (20) of the first set, the tows (20) of the first set passing over and under transverse tows (22) of the second set; and
a surface feature (18) integrally defined at the surface (14) of the cooling passage (12) by an insert member (24,26) disposed between adjacent tows (20) of at least the first set of tows (20), the insert member (24,26) having a cross-sectional size larger than the adjacent tows (20) of the first set so that the insert member (24,26) causes the surface feature (18) to project into the cooling passage (12) relative to an immediately surrounding surface region of the surface (14).

2. An air-cooled component (10) according to claim 1, wherein the insert member (24,26) is a cast ceramic insert (26) disposed parallel to and between the adjacent tows (20), and passes over and under transverse tows (22) of the second set of tows (22).

3. An air-cooled component (10) according to claim 2, wherein the cast ceramic insert (26) and the matrix material are formed of the same material.

4. An air-cooled component (10) according to claim 1, wherein the insert member (24,26) is a tow member (24) disposed parallel to and between the adjacent tows (20), and passes over and under transverse tows (22) of the second set of tows (22).

5. An air-cooled component (10) according to claim 4, wherein the tow member (24) is formed of the same material as the tows (20,22) of the first and second sets.

6. A method of forming an integral surface feature (18) in an air-cooled component (10) having at least one cooling passage (12) defined by a surface (14) of the component (10), at least a portion of the surface (14) being formed by a composite material comprising a preform (28) in a matrix material, the preform (28) comprising at least first and second sets of tows (20,22) woven together, the tows (20) of the first set being side-by-side to each other, the tows (22) of the second set being side-by-side to each other and transverse to the tows (20) of the first set, the tows (20) of the first set passing over and under transverse tows (22) of the second set, the method comprising the step of defining the integral surface feature (18) at the surface (14) of the cooling passage (12) by placing an insert member (24,26) between adjacent tows (20) of at least the first set of tows (20), the insert member (24,26) having a cross-sectional size larger than the adjacent tows (20) of the first set so as to form a protrusion (30) in the preform (28) and define the surface feature (18) in the composite material, the surface feature (18) projecting into the cooling passage (12) relative to an immediately surrounding surface region of the surface (14).

7. A method according to claim 6, wherein the insert member (24,26) is formed of a cast ceramic insert (26), disposed parallel to and between the adjacent tows (20), and passes over and under transverse tows (22) of the second set of tows (22).

8. A method according to claim 7, wherein the cast ceramic insert (26) and the matrix material are formed of the same material.

9. A method according to claim 6, wherein the insert member (24,26) is a tow member (24) disposed parallel to and between the adjacent tows (20), and passes over and under transverse tows (22) of the second set of tows (22).

10. A method according to claim 9, wherein the tow member (24) is formed of the same material as the tows (20,22) of the first and second sets.

## Patentansprüche

1. Luftgekühlte Komponente (10) enthaltend:
wenigstens einen Kühlkanal (12), der durch eine Oberfläche (14) von der Komponente (10) gebildet ist, wobei wenigstens ein Teil von der Oberfläche (14) durch ein Verbundmaterial gebildet ist, das wenigstens erste und zweite Sätze von Fäden (20,22) aufweist, die in einem Matrixmaterial zusammengewoben sind, wobei die Fäden (20) des ersten Satzes seitlich nebeneinander sind, die Fäden (22) des zweiten Satzes seitlich nebeneinander und senkrecht zu den Fäden (20) des ersten Satzes sind, wobei die Fäden (20) des ersten Satzes über und unter den Querfäden (22) des zweiten Satzes verlaufen, und
ein Oberflächenmerkmal (18), das einstückig an der Oberfläche (14) des Kühlkanals (12) durch ein Einsatzteil (24,26) gebildet ist, das neben den Fäden (20) von wenigstens dem ersten Satz von Fäden (20) angeordnet ist, wobei das Einsatzteil (24,26) eine grössere Querschnittsgrösse hat als die benachbarten Fäden (20) von dem ersten Satz, so dass das Einsatzteil (24,26) bewirkt, dass das Oberflächenmerkmal (18) relativ zu einem unmittelbar umgebenden Oberflächenbereich der Oberfläche (14) in den Kühlkanal (12) hinein ragt.

2. Luftgekühlte Komponente (10) nach Anspruch 1, wobei das Einsatzteil (24,26) ein gegossener Keramikeinsatz (26) ist, der parallel zu und zwischen den benachbarten Fäden (20) angeordnet ist und über und unter Querfäden (22) des zweiten Satzes von Fäden (22) verläuft.

3. Luftgekühlte Komponente (10) nach Anspruch 2, wobei der gegossesne Keramikeinsatz (26) und das Matrixmaterial aus dem gleichen Material gebildet sind.

4. Luftgekühlte Komponente (10) nach Anspruch 1, wobei das Einsatzteil (24,26) ein Fadenteil (24) ist, das parallel zu und zwischen den benachbarten Fäden (20) angeordnet ist und über und unter Querfäden (22) des zweiten Satzes von Fäden (22) verläuft.

5. Luftgekühlte Komponente (10) nach Anspruch 4, wobei das Fadenteil (24) aus dem gleichen Material wie die Fäden (20,22) der ersten und zweiten Sätze gebildet ist.

6. Verfahren zum Formen eines integralen Oberflächenmerkmals (18) in einer luftgekühlten Komponente (10), die wenigstens einen Kühlkanal (12) aufweist, der durch eine Oberfläche (14) von der Komponente (10) gebildet ist, wobei wenigstens ein Teil von der Oberfläche (14) durch ein Verbundmaterial gebildet ist, das eine Vorform (28) in einem Matrixmaterial aufweist, wobei die Vorform (28) wenigstens erste und zweite Sätze von Fäden (20,22) aufweist, die in einem Matrixmaterial zusammengewoben werden, wobei die Fäden (20) des ersten Satzes seitlich nebeneinander sind, die Fäden (22) des zweiten Satzes seitlich nebeneinander und senkrecht zu den Fäden (20) des ersten Satzes sind, wobei die Fäden (20) des ersten Satzes über und unter den Querfäden (22) des zweiten Satzes verlaufen, wobei das Verfahren den Schritt enthält, dass das integrale Oberflächenmerkmal (18) dadurch an der Oberfläche (14) des Kühlkanals (12) gebildet wird, dass ein Einsatzteil (24,26) zwischen benachbarten Fäden (20) wenigstens des ersten Satzes von Fäden (20) angeordnet wird, wobei das Einsatzteil (24,26) eine grössere Querschnittsgrösse hat als die benachbarten Fäden (20) von dem ersten Satz, um so einen Vorsprung (30) in der Vorform (28) formen und das Oberflächenmerkmal (18) in dem Verbundmaterial zu bilden, wobei das Oberflächenmerkmal (18) relativ zu einem unmittelbar umgebenden Oberflächenbereich der Oberfläche (14) in den Kühlkanal (12) hinein ragt.

7. Verfahren nach Anspruch 6, wobei das Einsatzteil (24,26) aus einem gegossenen Keramikeinsatz (26) gebildet wird, der parallel zu und zwischen den benachbarten Fäden (20) angeordnet wird und über und unter Querfäden (22) des zweiten Satzes von Fäden (22) verläuft.

8. Verfahren nach Anspruch 7, wobei der gegossesne Keramikeinsatz (26) und das Matrixmaterial aus dem gleichen Material gebildet werden.

9. Verfahren nach Anspruch 6, wobei das Einsatzteil (24,26) ein Fadenteil (24) ist, das parallel zu und zwischen den benachbarten Fäden (20) angeordnet wird und über und unter Querfäden (22) des zweiten Satzes von Fäden (22) verläuft.

10. Verfahren nach Anspruch 9, wobei das Fadenteil (24) aus dem gleichen Material wie die Fäden (20,22) der ersten und zweiten Sätze gebildet wird.

## Revendications

1. Composant refroidi par air (10) comprenant :
au moins un passage de refroidissement (12) défini par une surface (14) du composant (10), au moins une partie de la surface (14) étant définie par un matériau composite comprenant au moins un premier et un deuxième ensemble de câbles (20, 22) tissés ensemble à l'intérieur d'un matériau de matrice, les câbles (20) du premier ensemble étant placés côte à côte, les câbles (22) du deuxième ensemble étant placés côte à côte et en travers des câbles (20) du premier ensemble, les câbles (20) du premier ensemble passant sur et sous les câbles transversaux (22) du deuxième ensemble ; et
un élément de surface (18) défini intégralement à la surface (14) du passage de refroidissement (12) par un insert (24, 26) placé entre les câbles voisins (20) d'au moins le premier ensemble de câbles (20), l'insert (24, 26) étant de plus grosse section que les câbles voisins (20) du premier ensemble de sorte que l'insert (24, 26) fait saillir l'élément de surface (18) dans le passage de refroidissement par rapport à une région de surface immédiatement environnante de la surface (14).

2. Composant refroidi par air (10) selon la revendication 1, dans lequel l'insert (24, 26) est un insert en céramique moulé (26) disposé entre les câbles voisins (20) et parallèlement à ceux-ci, et passe sur et sous les câbles transversaux (22) du deuxième ensemble de câbles (22).

3. Composant refroidi par air (10) selon la revendication 2, dans lequel l'insert en céramique moulé (26) et le matériau de la matrice sont faits du même matériau.

4. Composant refroidi par air (10) selon la revendication 1, dans lequel l'insert (24, 26) est un élément de type câble (24) disposé entre les câbles voisins (20) et parallèlement à ceux-ci, et passe sur et sous les câbles transversaux (22) du deuxième ensemble de câbles (22).

5. Composant refroidi par air (10) selon la revendication 4, dans lequel l'élément de type câble (24) est fait du même matériau que les câbles (20, 22) des premier et deuxième ensembles.

6. Procédé pour former un élément de surface intégré (18) dans un composant refroidi par air (10) comportant au moins un passage de refroidissement (12) défini par une surface (14) du composant (10), au moins une partie de la surface (14) étant formée par un matériau composite comprenant une ébauche (28) en matériau de matrice, l'ébauche (28) comprenant au moins un premier et un deuxième ensemble de câbles (20, 22) tissés ensemble, les câbles (20) du premier ensemble étant placés côte à côte, les câbles (22) du deuxième ensemble étant placés côte à côte et en travers des câbles (20) du premier ensemble, les câbles (20) du premier ensemble passant sur et sous les câbles transversaux (22) du deuxième ensemble, le procédé comprenant l'étape consistant à définir l'élément de surface intégré (18) à la surface (14) du passage de refroidissement (12) en plaçant un insert (24, 26) entre les câbles voisins (20) d'au moins le premier ensemble de câbles (20), l'insert (24, 26) étant de plus grosse section que les câbles voisins (20) du premier ensemble afin de former une protubérance (30) dans l'ébauche (28) et de définir l'élément de surface (18) dans le matériau composite, l'élément de surface (18) faisant saillie dans le passage de refroidissement (12) par rapport à une région de surface immédiatement environnante de la surface (14).

7. Procédé selon la revendication 6, dans lequel l'insert (24, 26) est formé d'un insert en céramique moulé (26) disposé entre les câbles voisins (20) et parallèlement à ceux-ci, et passe sur et sous les câbles transversaux (22) du deuxième ensemble de câbles (22).

8. Procédé selon la revendication 7, dans lequel l'insert en céramique moulé (26) et le matériau de la matrice sont faits du même matériau.

9. Procédé selon la revendication 6, dans lequel l'insert (24, 26) est un élément de type câble (24) disposé entre les câbles voisins (20) et parallèlement à ceux-ci, et passe sur et sous les câbles transversaux (22) du deuxième ensemble de câbles (22).

10. Procédé selon la revendication 9, dans lequel l'élément de type câble (24) est fait du même matériau que les câbles (20, 22) des premier et deuxième ensembles.
